# EUROPÄISCHE PATENTSCHRIFT

(11) **EP 1 251 304 B1**
(45) Veröffentlichungstag und Bekanntmachung des Hinweises auf die Patenterteilung: **21.06.2006**
(21) Anmeldenummer: 02007870.5
(22) Anmeldetag: 09.04.2002
(51) Int. Cl.: F16L 11/12

(54) **Rohr, insbesondere Kunststoff- oder Verbundrohr**
Pipe, especially made of plastic or composite
Tuyau, notamment en matière plastique ou composite

(30) Priorität: 20.04.2001 DE 20106915 U
(43) Veröffentlichungstag der Anmeldung: 23.10.2002
(73) Patentinhaber: VIEGA GmbH & Co. KG., 57439 Attendorn (DE)
(72) Erfinder: Viegener, Walter, 57439 Attendorn (DE)
(74) Vertreter: Cohausz & Florack

(56) Entgegenhaltungen:
- EP-A- 0 802 365
- WO-A-92/21908
- WO-A-96/35069
- US-A- 5 315 748

## Beschreibung

Die vorliegende Erfindung betrifft eine Verbindungsanordnung nach dem Oberbegriff des Anspruches 1.

Es gibt Verbundrohre, die mit Fittings oder Armaturen verbindbar sind, wobei in die Rohre eine Stützhülse eingeschoben wird und um den zu verpressenden Abschnitt eine Preßhülse aus Metall gebracht wird. Durch Verpressen der Preßhülse und des Rohrabschnittes wird das Innenrohr auf die Stützhülse gedrückt, so dass zwischen dem Rohr und der Stützhülse eine abgedichtete Verbindung hergestellt ist. Die Preßhülse sorgt dabei für dafür, dass das Rohr sich nicht nachträglich ausdehnt und die Verbindung zwischen Stützhülse und Rohr lockert. An der Stützhülse kann ein weiteres Bauteil, wie eine Armatur oder ein Fitting angeschlossen sein. Nachteilig bei dieser Art der Verbindungsanordnung ist, dass nach dem Einschieben der Stützhülse schon eine vorläufige Abdichtung zwischen dem Rohr und der Stützhülse erreicht werden kann, so dass bei einem versehentlichen Vergessen des Verpressens zunächst keine Leckage auftreten muß. Da diese Abdichtung jedoch meist nicht von langer Dauer ist, tritt ein Schaden erst zu einem späteren Zeitpunkt ein und ist daher viel schwieriger auszumachen, insbesondere wenn die Rohre mittlerweile verputzt wurden.

Die US 5 315 748 zeigt die Verbindung eines Gartenschlauches mit einem Kupplungsstück, wobei an dem Schlauch an der Innenseite mehrere Rippen hervorstehen, die sich parallel zur Längsachse erstrecken. Durch diese Rippen soll ein unbeabsichtigtes Knicken des Schlauches vermieden werden. Zur Verbindung des Schlauches mit einem Verbindungsstück wird zunächst eine gewellte Hülse um den Schlauch angeordnet. Anschließend wird eine Stahlhülse in das Verbindungsstück eingefügt und über einen keilförmigen Schaft wird das Verbindungsstück aufgeweitet. Dabei soll eine abgedichtete Verbindung zwischen dem Schlauch und dem Verbindungsstück hergestellt werden.

Ferner offenbart die EP 802 365 einen beschichteten Schlauch, der in Endbereichen mit einem zylindrischen Element verbindbar ist. Mit der Beschichtung an dem Schlauch soll die Verbindung zu dem zylindrischen Element verbessert werden.

Es ist daher Aufgabe der vorliegenden Erfindung, eine Verbindungsanordnung der eingangs genannten Art bereitzustellen, die einfach aufgebaut ist und bei der vor dem Verpressen keine Abdichtung zwischen Stützhülse und Rohr erreicht wird, um ein versehentliches Vergessen des Verpressens zu vermeiden.

Diese Aufgabe wird mit einer Verbindungsanordnung mit den Merkmalen des Anspruches 1 gelöst.

Erfindungsgemäß ist ein Dichtring an der Stützhülse vorgesehen, wobei der Dichtring in einer Nut am Umfang der Stützhülse eingelegt, wobei auf dem Dichtring die Ausbeulung anliegt oder durch die Vertiefung der Spalt zwischen dem Rohr und dem Dichtring und dem Rohr und der Stützhülse ausgebildet ist. Dadurch ist an dem verpressbaren Abschnitt an der Innenseite des Rohres mindestens eine Ausbeulung oder Vertiefung vorgesehen, so dass im unverpressten Zustand ein Spalt zwischen einer eingefügten Stützhülse und dem zur Ausbeulung benachbarten Bereich vorgesehen ist oder durch die Vertiefung gebildet ist, wobei der Spalt durch Verpressung des verpressbaren Abschnittes verschließbar ist. Im unverpressten Zustand kann durch den Spalt ein in dem Rohr enthaltenes Fluid nach außen dringen, so dass ein versehentliches Vergessen des Verpressens sofort sichtbar wird. Erst beim Verpressen wird der Spalt verschlossen, um eine dichte Verbindung bereitzustellen. Das Verpressen kann entweder über ein Preßwerkzeug oder durch Verschrauben über einen Klemmring vorgenommen werden. An der Innenseite des Rohres können über den Umfang verteilt ein oder mehrere Ausbeulungen und/oder Vertiefungen vorgesehen sein, die unterschiedliche Formen aufweisen können.

Gemäß einer bevorzugten Ausführungsform der Erfindung erstreckt sich die Ausbeulung oder die Vertiefung durchgehend über die Länge des Rohres. Dadurch kann das Rohr schon vorgefertigt werden, ohne dass bei der Montage eine Vertiefung und/oder Ausbeulung hergestellt werden muss. Dabei kann das Rohr in einer beliebigen Länge abgeschnitten werden, da jeder Abschnitt des Rohres als verpressbarer Abschnitt verwendet werden kann.

Alternativ kann die Ausbeulung oder die Vertiefung jeweils nur abschnittsweise an dem Rohr vorgesehen sein und beispielsweise nachträglich in das Rohr durch Pressen, Schneiden, Fräsen oder andere geeignete Bearbeitungsschritte eingeformt werden.

Vorzugsweise erstreckt sich die Ausbeulung über einen geringen Umfangsabschnitt des Innendurchmessers, um das Rohr beim Verpressen mit geringem Aufwand mit der Stützhülse verbinden zu können. Die vom kreisrunden Querschnitt abweichende Kontur des Rohres kann dabei auf ein Minimum reduziert werden. Auf ähnliche Weise kann die Vertiefung als flache Rundung ausgebildet sein.

Gemäß einer bevorzugten Ausführungsform ist das Rohr aus Kunststoff ausgebildet. Insbesondere das an der Innenseite des Rohres vorgesehene Material muss eine gewisse Elastizität aufweisen, um beim Verpressen den gebildeten Spalt verschlie-ßen zu können. Vorzugsweise ist das Rohr als Verbundrohr ausgebildet und weist mehrere miteinander verbundene Schichten aus unterschiedlichen Materialien auf. Beispielsweise kann das Verbundrohr flexibel ausgebildet sein, und ein Innenrohr und eine äußere Schicht aus Polyethylen aufweisen, zwischen denen eine aus E-VOH gebildete Sauerstoffsperrschicht vorgesehen ist und beidseitig mit dem Innenrohr und der äußeren Schicht verklebt ist. Statt der Sauerstoffsperrschicht aus E-VOH kann auch eine Aluminiumschicht vorgesehen sein, so dass das Rohr verbiegbar ist und eine gewünschte Position nach dem Verbiegen beibehält.

Zur Fixierung der Verbindungsanordnung kann um den verpressten Abschnitt eine Preßhülse, beispielsweise aus Metall vorgesehen sein. Alternativ kann die Verbindung auch durch Verschrauben mittels eines Klemmringes erfolgen, der den verpressten Abschnitt des Rohres umgibt.

Die Stützhülse kann dabei integral mit einem Fitting oder einer Armatur ausgebildet sein, so dass die Verbindungstechnik für beliebige Anschlüsse eingesetzt werden kann.

Die Erfindung wird nachfolgend anhand von mehreren Ausführungsbeispielen mit Bezug auf die beigefügten Zeichnungen näher erläutert. Es zeigen:
- Figur 1: eine Seitenansicht auf eine Verbindungsanordnung gemäß einer ersten Ausführungsform der Erfindung vor dem Verpressen;
- Figur 2A: eine Schnittansicht der Verbindungsanordnung der Fig. 1 entlang der Linie X-X;
- Figur 2B: eine vergrößerte Detailansicht A der Fig. 2A;
- Figur 3A: eine der Fig. 2A entsprechende Schnittansicht einer weiteren Ausführungsform einer erfindungsgemäßen Verbindungsanordnung;
- Figur 3B: eine vergrößerte Detailansicht B der Fig. 3A;
- Figur 4A: eine der Fig. 2A entsprechende Schnittansicht einer weiteren Ausführungsform einer erfindungsgemäßen Verbindungsanordnung;
- Figur 4B: eine vergrößerte Detailansicht C der Fig. 4A;
- Figur 5A: eine der Fig. 2A entsprechende Schnittansicht einer weiteren Ausführungsform einer erfindungsgemäßen Verbindungsanordnung;
- Figur 5B: eine vergrößerte Detailansicht D der Fig. 5A;
- Figur 6A: eine Querschnittsansicht eines erfindungsgemäßen Rohres;
- Figur 6B: eine vergrößerte Detailansicht W der Fig. 6A;
- Figur 7A: eine Querschnittsansicht eines weiteren erfindungsgemäßen Rohres;
- Figur 7B: eine vergrößerte Detailansicht X der Fig. 7A;
- Figur 8A: eine Querschnittsansicht eines weiteren erfindungsgemäßen Rohres;
- Figur 8B: eine vergrößerte Detailansicht Y der Fig. 8A;
- Figur 9A: eine Querschnittsansicht eines weiteren erfindungsgemäßen Rohres, und
- Figur 9B: eine vergrößerte Detailansicht Z der Fig. 9A;

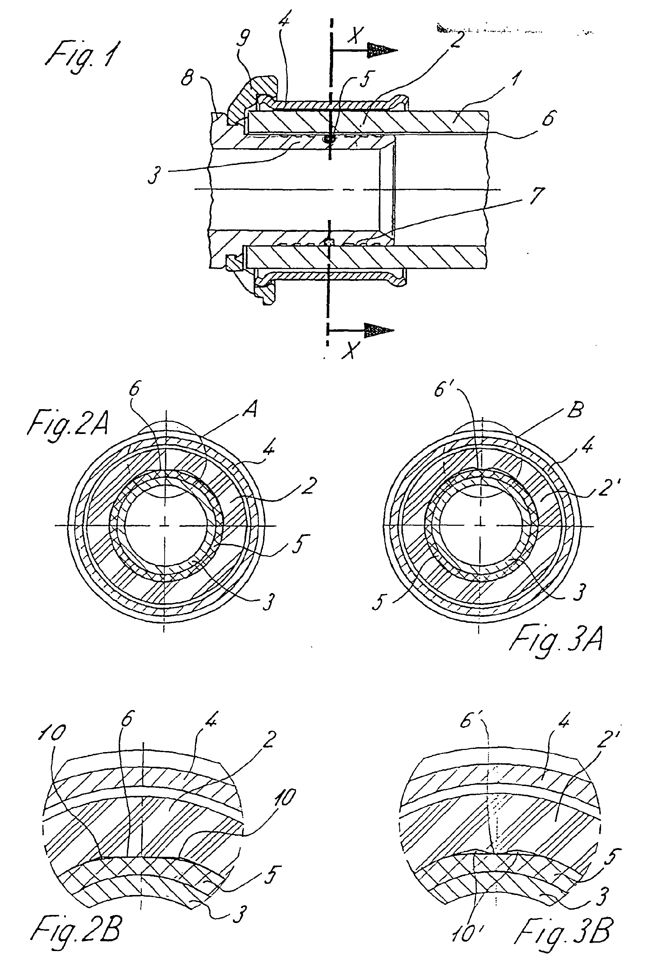

In Figur 1 ist eine Verbindungsanordnung mit einem Rohr 1 gezeigt, dass beispielsweise als ein Verbundrohr aus Kunststoff und/oder anderen Materialien ausgebildet ist. Das Rohr 1 weist einen verpressbaren Abschnitt 2 auf, in den eine Stützhülse 3 eingeschoben ist und der von außen von einer Preßhülse 4 umgeben ist. Die Stützhülse 3 weist mehrere Rippen 7 zur Vorfixierung und späteren Sicherung der Preßverbindung gegen ein Verschieben auf. Ferner ist an der Stützhülse 3 ein Dichtring 5 vorgesehen, der in einer Nut am Umfang der Stützhülse 3 eingelegt ist. Die Stützhülse 3 weist außerhalb des Rohres 1 eine Schulter 8 auf, an der ein Ring 9 zur Abdeckung der Stirnkante des Rohres 1 und der Preßhülse 4 anliegt. Benachbart zu der Schulter 8 kann integral ein Fitting oder eine Armatur mit der Stützhülse 3 ausgebildet sein.

Wie in den Fig. 2A und 2B zu sehen ist, besitzt das Rohr 1 an dem verpressbaren Abschnitt 2 eine Ausbeulung 6, die von der ansonsten im Querschnitt kreisförmigen Innenkontur abweicht und nach innen hervorsteht. Die Ausbeulung 6 liegt mit dem hervorstehenden Abschnitt an der Stützhülse 3 bzw. dem Dichtring 5 an, so dass benachbart zu der Ausbeulung 6 jeweils ein Spalt 10 gebildet ist, durch den im unverpressten Zustand ein Fluid strömen kann. Erst durch das Verpressen des Rohres 1 an dem verpressbaren Abschnitt 2 wird der Spalt 10 dauerhaft verschlossen, wobei das Material des Rohres 1 soweit verformbar ist, dass es in den Spalt 10 jeweils eingedrückt wird. Die Ausbeulung 6 ist in diesem Ausführungsbeispiel über die gesamte Länge des Rohres 1 gebildet, so dass das Rohr 1 an beliebiger Stelle abgelängt werden kann und die Position des verpressbaren Abschnittes 2 frei gewählt werden kann.

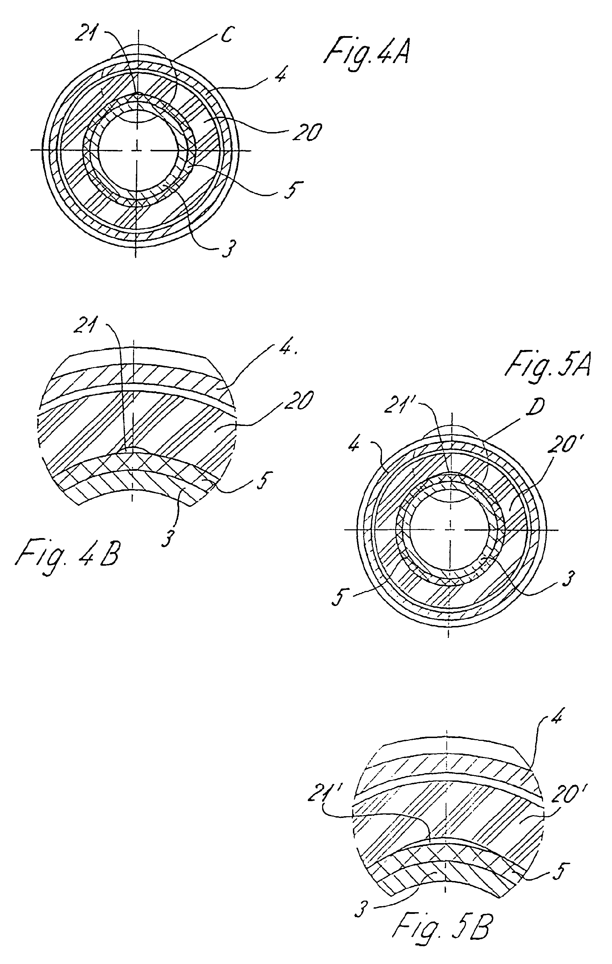

In den Fig. 3A und 3B ist eine leicht modifizierte Ausführungsform dargestellt, bei der ein verpressbarer Abschnitt 2' eines Rohres eine Ausbeulung 6' aufweist, die verglichen mit der Ausbeulung 6 bei dem ersten Ausführungsbeispiel stärker radial nach innen hervorsteht. Dadurch ist auch die Form der benachbart gebildeten Spalte 10' zwischen dem verpressbaren Abschnitt 2' und dem Dichtring 5 bzw. der Stützhülse 3 etwas größer ausgebildet.

Die Form der Ausbeulung 6 bzw. 6' kann frei gewählt werden. Wichtig bei der Ausbeulung 6 bzw. 6' ist lediglich, dass ein Spalt 10 bzw. 10' benachbart ausgebildet ist, um im unverpressten Zustand ein Fluid nach außen austreten zu lassen.

In Fig. 4A und 4B ist eine weitere Ausführungsform eines erfindungsgemäßen Rohres 20 gezeigt, in das eine Stützhülse 3 mit einem Dichtring 5 eingeschoben ist. Um das Rohr 20 ist wieder eine Preßhülse 4 vorgesehen, die noch nicht verpresst ist. An dem Innenumfang des Rohres 20 ist eine rinnenartige Vertiefung 21 ausgebildet, die sich über die gesamte Länge des Rohres 20 erstreckt. Die Vertiefung 21 kann durch Pressen, Fräsen, Schneiden, Ätzen oder andere Herstellungsverfahren gebildet sein. Durch die Vertiefung 21 ist ein Spalt zwischen dem Rohr 20 und dem Dichtring 5 bzw. der Stützhülse 3 ausgebildet, so dass im unverpressten Zustand ein Fluid durch die Vertiefung 21 strömen kann und ein versehentliches Vergessen des Verpressens sofort erkannt werden würde. Beim Verpressen des Rohres 20 mit der Preßhülse 4 wird der durch die Vertiefung 21 gebildete Spalt verschlossen.

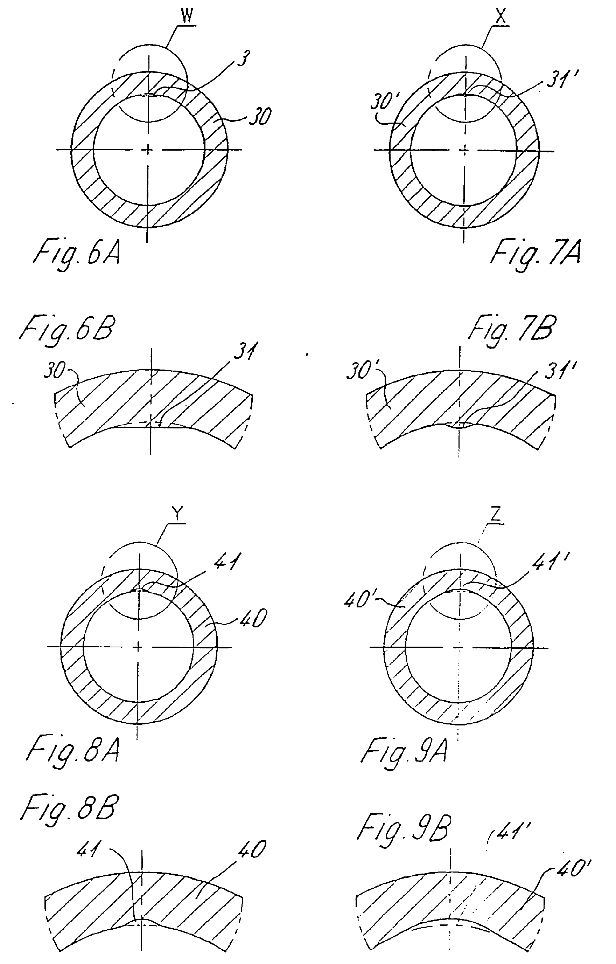

In Fig. 5A und 5B ist eine weiter Ausführungsform eines Rohres 20' mit einer Vertiefung 21' dargestellt. Die Vertiefung 21' erstreckt sich verglichen mit der Vertiefung 21 bei dem vorangegangenen Ausführungsbeispiel über einen größeren Abschnitt des Innenumfangs des Rohres 20'. Die Vertiefung 21' wird beim Verpressen durch Umformung des Materials des Rohres 20' verschlossen.

In den Fig. 6A und 6B ist ein Rohr 30 mit einer Ausbeulung 31 ohne weitere Bauteile zur Herstellung einer Verbindungsanordnung gezeigt. Die Ausbeulung 31 erstreckt sich über einen relativ breiten aber flachen Abschnitt an dem Innenumfang des Rohres 30, wobei die kreisförmige Kontur mit gestrichelten Linien dargestellt ist.

In Fig. 7A und 7B ist ähnlich zu den Fig. 6A und 6B ein Rohr 30' gezeigt, dass bezogen auf den Umfang des Rohres 30' eine eher schmal ausgebildete Ausbeulung 31' aufweist.

In Fig. 8A und 8B ist ein Rohr 40 dargestellt, dass eine rinnenartige Vertiefung 41 aufweist, die sich über die gesamte Länge des Rohres 40 erstreckt. Zwischen einer kreisförmigen mit gestrichelten Linien dargestellten Innenkontur und dem Rohr 40 ist so ein beim Verpressen verschließbarer Spalt ausgebildet.

Eine leicht modifizierte Ausführungsform ist in den Fig. 9A und 9B dargestellt, bei der ein Rohr 40' erkennbar ist, das eine Vertiefung 41' umfasst, die sich über einen größeren Abschnitt des Umfangs des Rohrs 40' erstreckt, aber vergleichsweise flach ausgebildet ist.

In den dargestellten Ausführungsbeispielen sind die Ausbeulungen und Vertiefungen durchgehend an dem jeweiligen Rohr ausgebildet. Es ist auch möglich, die Ausbeulungen oder Vertiefungen nur abschnittsweise an dem jeweiligen Rohr vorzusehen, beispielsweise nur an dem verpressbaren Abschnitt. Ferner kann die Form der Ausbeulungen und Vertiefungen frei gewählt werden, beispielsweise dreieckig, halbkreisförmig oder eckig ausgebildet sein. Die Ausbeulungen können auch durch ein nachträglich in das Rohr eingebrachtes Material gebildet werden. Ferner können Ausbeulungen und Vertiefungen beliebig miteinander kombiniert werden. Wichtig ist nur, dass der oder die im unverpressten Zustand gebildeten Spilz(e) beim Verpressen verschlossen werden.

Statt eines Verbundrohres können auch andere Rohre aus Kunststoff oder Metall eingesetzt werden. Das Material des Rohres kann entsprechend den jeweiligen Anforderungen frei gewählt werden.

## Patentansprüche

1. Verbindungsanordnung, mit einer Stützhülse (3), die in ein Rohr (1) eingefügt ist und abgedichtet mit diesem verbunden ist, wobei das Rohr (1), insbesondere Kunststoff- oder Verbundrohr, mit im Querschnitt im wesentlichen kreisförmigen Innendurchmesser und einem verpressbaren Abschnitt (2), in den die Stützhülse (3) zum Herstellen einer dichten Pressverbindung einfügbar ist, ausgebildet ist, wobei an dem verpressbaren Abschnitt (2) an der Innenseite des Rohres (1) mindestens Ausbeulung (6, 6', 31, 31') oder Vertiefung (21, 21', 41, 41') vorgesehen ist, so dass im unverpressten Zustand ein Spalt (10, 10') zwischen der eingefügten Stützhülse (3) und dem zur Ausbeulung (6, 6', 31, 31') benachbarten Bereich vorgesehen ist oder durch die Vertiefung (21, 21', 41, 41') gebildet ist, wobei der Spalt (10, 10') durch Verpressung des verpressbaren Abschnittes (2) verschließbar ist.
**dadurch gekennzeichnet, dass**
ein Dichtring (5) an der Stützhülse (3) vorgesehen ist, wobei der Dichtring (5) in einer Nut am Umfang der Stützhülse (3) eingelegt ist, und wobei auf dem Dichtring (5) die Ausbeulung (6, 6', 31, 31') anliegt oder durch die Vertiefung (21, 21', 41, 41') der Spalt (10, 10') zwischen dem Rohr und dem Dichtring (5) und dem Rohr und der Stützhülse (3) ausgebildet ist.

2. Verbindungsanordnung nach Anspruch 1, **dadurch gekennzeichnet, dass** die Vertiefung (21, 21', 41, 41') sich durchgehend über die Länge des Rohres (1) erstreckt.

3. Verbindungsanordnung nach Anspruch 1, **dadurch gekennzeichnet, dass** die Vertiefung (21, 21', 41, 41') jeweils nur abschnittsweise an dem Rohr (1) vorgesehen ist.

4. Verbindungsanordnung nach einem der Ansprüche 1 bis 3, **dadurch gekennzeichnet, dass** die Vertiefung (21, 21', 41, 41') als flache Rundung ausgebildet ist.

5. Verbindungsanordnung nach einem der Ansprüche 1 bis 4, **dadurch gekennzeichnet, dass** das Rohr (1) aus Kunststoff ausgebildet ist.

6. Verbindungsanordnung nach einem der Ansprüche 1 bis 5, **dadurch gekennzeichnet, dass** das Rohr (1) als Verbundrohr ausgebildet ist und mehrere miteinander verbundene Schichten aus unterschiedlichen Materialien aufweist.

7. Verbindungsanordnung nach einem der Ansprüche 1 bis 6, **dadurch gekennzeichnet, dass** um den verpressten Abschnitt (2) eine Presshülse (4) vorgesehen ist.

8. Verbindungsanordnung nach einem der Ansprüche 1 bis 6, **dadurch gekennzeichnet, dass** um den verpressten Abschnitt ein Klemmring vorgesehen ist.

9. Verbindungsanordnung nach einem der Ansprüche 1 bis 8, **dadurch gekennzeichnet, dass** die Stützhülse (3) integral mit einem Fitting oder einer Armatur ausgebildet ist.

## Claims

1. A connecting device with a support sleeve (3) which is inserted in a pipe (1) and is connected to it so that it is sealed, wherein the pipe (1), in particular a plastic or composite pipe, is designed with an inside diameter that is essentially circular in cross-section and a press-on section (2), in which the support sleeve (3) can be inserted for making a tight press connection, wherein at least dishing (6, 6', 31, 31') or recess (21, 21' 41, 41') is provided on the press-on section (2) on the inside of the pipe (1), so that in the unpressed condition a gap (10, 10') is provided between the inserted support sleeve (3) and the region adjacent to the dishing (6, 6', 31, 31'), or is formed by the recess (21, 21', 41, 41'), wherein the gap (10, 10') can be closed by the pressing of the press-on section (2), **characterised in that** a sealing ring (5) is provided on the support sleeve (3), wherein the sealing ring (5) is inserted in a groove on the circumference of the support sleeve (3), and wherein the dishing (6, 6', 31, 31') rests on the sealing ring (5), or the gap between the pipe and the sealing ring (5) and the pipe and the support sleeve (3) is formed by the recess (21, 21', 41, 41').

2. The connecting device according to Claim 1, **characterised in that** the recess (21, 21', 41, 41') extends throughout the length of the pipe (1).

3. The connecting device according to Claim 1, **characterised in that** the recess (21, 21', 41, 41') is only provided on the pipe (1) in sections.

4. The connecting device according to one of Claims 1 to 3, **characterised in that** the recess (21, 21', 41, 41') is designed as a flat rounding.

5. The connecting device according to one of Claims 1 to 4, **characterised in that** the pipe (1) is formed from plastic.

6. The connecting device according to one of Claims 1 to 5, **characterised in that** the pipe (1) is designed as a composite pipe, and has several layers of different materials connected to each other.

7. The connecting device according to one of Claims 1 to 6, **characterised in that** a pressed sleeve (4) is provided around the pressed-on section (2).

8. The connecting device according to one of Claims 1 to 6, **characterised in that** a clamping ring is provided around the pressed-on section.

9. The connecting device according to one of Claims 1 to 8, **characterised in that** the support sleeve (3) is designed so that it is integral with a fitting or a fixing device.

## Revendications

1. Dispositif de raccordement avec une douille d'appui (3), qui est insérée dans un tube (1) et est raccordée à celui-ci de manière étanche, dans lequel le tube (1), en particulier un tube synthétique ou un tube composite, est conformé avec un diamètre interne en coupe transversale sensiblement circulaire et une section compressible (2), dans lequel la douille d'appui (3) peut être introduite pour établir un raccordement de serrage étanche, dans lequel il est prévu sur la section compressible (2), sur la face interne du tube (1), au moins une partie bombée (6, 6', 31, 31') ou une partie renfoncée (21,21', 41,41') de manière que, à l'état non comprimé, un interstice (10, 10') soit prévu entre la douille d'appui introduite (3) et la zone voisine de la partie bombée (6, 6', 31,31') ou formé par la partie renfoncée (21, 21', 41,41'), l'interstice (10, 10') pouvant être fermé en comprimant la section compressible (2), **caractérisé en ce qu'**il est prévu sur la douille d'appui (3) une bague d'étanchéité (5) qui est insérée dans une rainure ménagée sur la périphérie de la douille d'appui (3) et dans lequel la partie bombée (6, 6', 31, 31') s'applique sur la bague d'étanchéité (5), ou l'interstice (10, 10') est formé par la partie renfoncée (21,21', 41,41') entre le tube et la bague d'étanchéité (5) et le tube et la douille d'appui (3).

2. Dispositif de raccordement selon la revendication 1, **caractérisé en ce que** la partie renfoncée (21,21', 41,41') s'étend en continu sur la longueur du tube (1).

3. Dispositif de raccordement selon la revendication 1, **caractérisé en ce que** la partie renfoncée (21,21', 41,41') n'est prévue respectivement que par sections sur le tube (1).

4. Dispositif de raccordement selon l'une quelconque des revendications 1 à 3, **caractérisé en ce que** la partie renfoncée (21, 21', 41, 41') se présente sous la forme d'un arrondi plat.

5. Dispositif de raccordement selon l'une quelconque des revendications 1 à 4, **caractérisé en ce que** le tube (1) est formé en matériau synthétique.

6. Dispositif de raccordement selon l'une quelconque des revendications 1 à 5, **caractérisé en ce que** le tube (1) se présente sous la forme d'un tube composite et possède plusieurs couches en matériaux différents reliées les unes aux autres.

7. Dispositif de raccordement selon l'une quelconque des revendications 1 à 6, **caractérisé en ce qu'**une douille de serrage (4) est prévue autour de la section comprimée (2).

8. Dispositif de raccordement selon l'une quelconque des revendications 1 à 6, **caractérisé en ce qu'**une bague de serrage est prévue autour de la section comprimée.

9. Dispositif de raccordement selon l'une quelconque des revendications 1 à 8, **caractérisé en ce que** la douille d'appui (3) est formée d'une seule pièce avec une robinetterie ou un accessoire de tuyauterie.
